(19) Europäisches Patentamt
European Patent Office
Office européen des brevets

(11) Numéro de publication: 0 218 722
B1

# (12) FASCICULE DE BREVET EUROPÉEN

(45) Date de publication du fascicule du brevet: **06.12.89**

(51) Int. Cl.⁴: **C 07 C 93/193**, C 07 C 147/12, C 08 F 20/34

(21) Numéro de dépôt: **86903398.5**

(22) Date de dépôt: **16.05.86**

(86) Numéro de dépôt international: **PCT/FR 86/00167**

(87) Numéro de publication internationale: **WO 86/06716 (20.11.86 Gazette 86/25)**

## (54) UTILISATION DE COMPOSITIONS POLYMERISABLES DONNANT DES POLYMERES AYANT DE BONNES PROPRIETES THERMIQUES ET APPLICATIONS DES POLYMERES AINSI OBTENUS.

(30) Priorité: **17.05.85 FR 8507494**
**25.02.86 FR 8602564**

(43) Date de publication de la demande: **22.04.87 Bulletin 87/17**

(45) Mention de la délivrance du brevet: **06.12.89 Bulletin 89/49**

(84) Etats contractants désignés: **DE FR GB IT NL**

(56) Documents cité:
**DE-A-2 059 817**
**GB-A-1 399 949**
**US-A-4 087 619**

**Chemical Abstracts, vol.103, No. 2, 15 July 1985, Columbus, Ohio (US) see page 583, abstract 14612h, & JP, A, 59218441 (NIPPON SODA CO. LTD.) 8 December 1984**
**Chemical Abstracts, vol. 99, No. 26 , 26 December 1983, Columbus, Ohio (US) see page 636, abstract 222411t**
**Chemical Abstracts, vol. 94, No. 20, 18 May 1981, Columbus, Ohio (US9 see page 603, abstract 165684e**

(73) Titulaire: **INSTITUT NATIONAL DE RECHERCHE CHIMIQUE APPLIQUEE, 18 Bis, Boulevard de la Bastille, F-75012 Paris (FR)**

(72) Inventeur: **DELFORT, Bruno, 15, rue Broca, F-75005 Paris (FR)**
Inventeur: **LUCOTTE, Georges, 41, domaine du Château, F-91380 Chilly Mazarin (FR)**

(74) Mandataire: **Santarelli, Marc, Cabinet Rinuy et Santarelli 14, avenue de la Grande Armée, F-75017 Paris (FR)**

**EP 0 218 722 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1989

**Description**

L'invention concerne l'utilisation de compositions polymérisables dans des conditions de polymérisation radicalaire pour donner, avec une grande rapidité de mise en oeuvre, des polymères de bonnes propriétés thermiques. Ces compositions contiennent au moins un monomère acrylique ou méthacrylique de la forme:

$$\begin{array}{ccccc} R^1 & & & & R^1 \\ | & & & & | \\ N & - & R & - & N \\ | & & & & | \\ R^1 & & & & R^2 \end{array} \qquad (A)$$

où:

$R^1$ est un groupement acrylique ou méthacrylique répondant à la formule $CH_2 = \underset{R^3}{\underset{|}{C}}-COOCH_2-CH(OH)-CH_2-$

avec $R^3$ = H ou $CH_3$;

$R^2$ représente un atome d'hydrogène, un enchaînement aliphatique saturé pouvant comporter jusqu'à dix atomes de carbone, par exemple un radical $(-CH_2-\underset{OH}{\underset{|}{CH}}-CH_2-OH)$ ou $(-CH_2-\underset{OH}{\underset{|}{CH}}-CH_2-CH_3)$, ou un groupement identique à $R^1$;

R est un groupement divalent comprenant au moins un cycle aliphatique ou aromatique substitué ou non.

Parmi les monomères:

$$\begin{array}{ccccc} R^1 & & & & R^1 \\ | & & & & | \\ N & - & R & - & N \\ | & & & & | \\ R^1 & & & & R^2 \end{array}$$

entrant dans les compositions de l'invention, on peut citer ceux dans lesquels:

- le groupement R contient deux cycles aliphatiques ou aromatiques articulés et est de la forme $R^4-R^5-R^4$ où $R^4$ représente un radical cyclique ou aromatique qui renferme de préférence 5 à 10 atomes de carbone substitués ou non par des groupements aliphatiques ou des hétéroatomes, en particulier le radical $R^4$ pourra être de la forme:

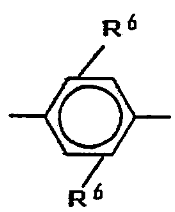 ou 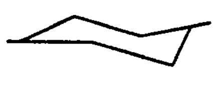

où $R^6$ représente un atome d'hydrogène, d'halogène, un radical méthyle, éthyle ou isopropyle;
- $R^5$ représente un radical qui peut être, soit un simple atome (tel l'oxygène), soit un groupe d'atomes comportant des atomes de carbone, d'hydrogène, d'oxygène et / ou de soufre, permettant de relier les cycles décrits pour $R^4$ par des motifs alkylènes tels que méthylène ou éthylène ou des liaisons éthers ou sulfones.

Le groupement R contient un seul cycle aliphatique ou aromatique substitué ou non, en particulier ceux où R est de la forme:

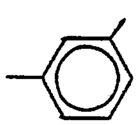 , 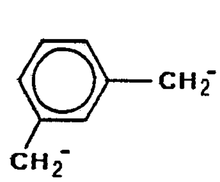

ou

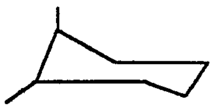

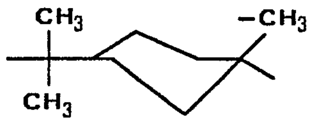

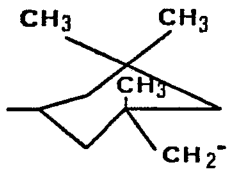

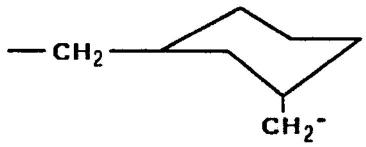

Cette utilisation est caractérisée en ce qu'elle conduit dans des conditions de polymérisation radicalaire à des polymères tridimensionnels réticulés ayant une température de déflexion sous charge (HDT), définie par la norme NFT 51-005 avec contrainte de 1,8 $N/mm^2$, allant jusqu'à 227°C.

La grande réactivité des dérivés acryliques et méthacryliques dans les conditions de la polymérisation radicalaire et notamment leur bonne réactivité sous électrons accélérés est bien connue de l'homme du métier.

On connaît notamment des esters diacryliques ou diméthacryliques répondant aux formules suivantes:

(1) 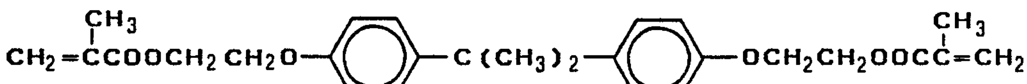

(2) 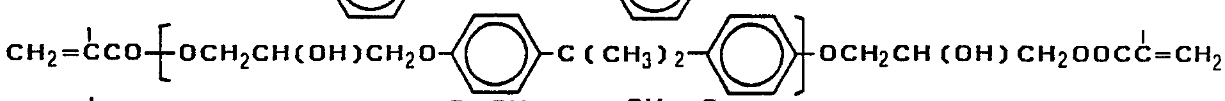

(3) 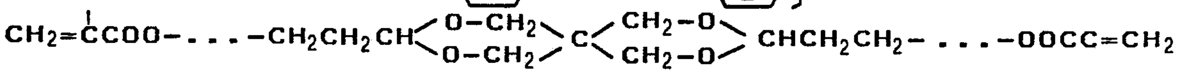

et obtenus, soit par estérification par l'acide méthacrylique du produit d'addition de l'oxyde d'éthylène sur le bisphénol (produit 1), soit à partir d'acide (méth)acrylique, d'épichlorhydrine et de bisphénol A (produit 2), soit par réaction d'acide (méth)acrylique sur le diallylidènepentaérythritol (produit 3).

De tels produits présentant des groupements acryliques ou méthacryliques entrent dans des compositions de résines thermodurcissables.

Différentes compositions contenant de tels esters diacryliques ou diméthacryliques en présence de différents diluants réactifs ont été polymérisés sous électrons accélérés par la Demanderesse et soumis ensuite à un post-traitement thermique destiné à améliorer les propriétés thermiques du polymère résultant. Les valeurs de température de déflection sous charge (HDT) mesurées dans les conditions définies par la norme NF-51.005 et caractérisant les propriétés thermiques des polymères, ont été dans les meilleurs des cas, de l'ordre de 150°C.

Or certaines applications, notamment du domaine du revêtement de surface, en particulier en électronique ou du domaine des matériaux composites nécessitent l'emploi de polymères présentant des propriétés thermiques nettement plus élevées, de l'ordre de 180°C; voire 200°C.

Différents brevets, en particulier les brevets US-3 868 409 et 3 975 340 révèlent la possibilité de faire réagir des composés époxy insaturés sur différentes monoamines ou polyamines et l'aptitude des produits résultant de cette réaction, notamment de ceux sous forme tétra-acryliques ou tétra-méthacryliques à être polymérisés.

La Demanderesse a découvert qu'en faisant réagir dans un procédé tel que décrit dans ces brevets une diamine particulière répondant à la formule $H_2N-R-NH_2$ dans laquelle R a la signification donnée précédemment, sur un acrylate ou un méthacrylate de glycidyle, on obtenait des produits conduisant par polymérisation ou copolymérisation radicalaire à des polymères présentant des propriétés thermiques nettement meilleures que ceux obtenus à partir de monomères acryliques classiquement utilisés.

Ces produits et les compositions en cause ici allient une grande aptitude à la réticulation conduisant à des polymères tri-dimensionnels fortement réticulés infusibles et insolubles et de bonnes performances thermiques. Il s'ensuit que ces produits peuvent être avantageusement utilisés, entre autres, dans certaines formulations destinées à l'élaboration de vernis, d'adhésifs, de films, de matériaux composites et autres.

Les compositions en question contiennent au moins un monomère de la forme:

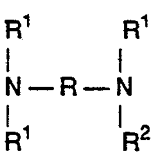

où $R^1$, $R^2$ et R ont les significations données précédemment, associé éventuellement à des monomères vinyliques, acryliques ou méthacryliques, ou à d'autres polymères ou prépolymères insaturés.

Parmi les monomères insaturés utilisables, on peut citer par exemple les acrylates et méthacrylates de butyle d'hexyle, d'heptyle, d'éthyl-2-hexyle, de lauryle, de diméthylaminoéthyle, d'hydroxyéthyle, d'hydroxypropyle, les composés vinyliques du type N-vinylpyrrolidone, divinylbenzène, vinyltoluène, cyanurate de tri-allyle.

Les prépolymères ou polymères insaturés pouvant entrer dans les compositions seront choisis par exemple parmi les esters acryliques ou méthacryliques, des diglycidyléthers, des bisphénols A ou F, ainsi que parmi les esters acryliques ou méthacryliques de polyuréthanes aromatiques ou aliphatiques.

Préférentiellement, pour avoir une réactivité plus élevée, c'est-à-dire une plus grande aptitude à la réticulation, associée à des propriétés thermomécaniques comparables du produit réticulé, les compositions contiendront des monomères:

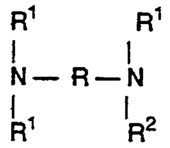

dans lesquels R contient un ou deux cycles aliphatiques plutôt qu'aromatiques. On pourra également choisir le monomère:

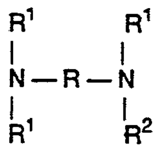

en fonction de la viscosité souhaitée pour la composition.

C'est ainsi que parmi les produits pour lesquels le groupement R contient un seul cycle aromatique, on préfèrera, pour avoir des viscosités plus faibles, ceux où ce cycle est aliphatique.

Le durcissement de ces compositions sera réalisé par un processus de copolymérisation radicalaire réticulante.

Cette polymérisation pourra s'effectuer par des techniques traditionnelles telles que l'emploi d'initiateurs chimiques: peroxydes, hydroperoxydes, composés azoïques: processus accéléré ou non par exemple par des amines ou des sels de cobalt ou d'étain, et à des températures plus ou moins élevées selon le système d'initiation choisi.

Ces compositions peuvent également être réticulées sous l'action d'un rayonnement X ou ultraviolet. Dans ce dernier cas, on aura recours à des photo-initiateurs tels que la benzoïne ou ses dérivés, ou à des photosensibilisateurs tels que la benzophénone, le triéthylaminoéthanol ou la benzophénone triéthylamine. Les polymérisations s'effectuent à température ambiance. Les temps d'exposition varient de quelques secondes à quelques minutes.

Une autre solution consiste à polymériser ces compositions sous l'action d'un faisceau d'électrons accélérés. Le principal intérêt de ce procédé tient à l'extrême vitesse de polymérisation des formulations traitées.

L'irradiation s'effectue à température et sous atmosphère ambiante. Dans certains cas, le recours à une atmosphère inerte améliorera l'état de surface des polymères obtenus.

Dans certains cas, un post-traitement thermique pourra être appliqué à des températures comprises entre 100 et 200°C, et d'une durée de quelques minutes à quelques dizaines de minutes selon les techniques utilisées (étuve, infrarouge, micro-ondes...).

Un autre avantage de l'utilisation des électrons accélérés tient à la bonne pénétration de ceux-ci dans le milieu à durcir, ce qui en fait une solution préférable au rayonnement ultraviolet pour la polymérisation de pièces en matériaux composites.

Le faible coût énergétique dû à ce type de procédé sera également un atout.

Cette méthode préférée de polymérisation consiste à soumettre les compositions de l'invention à l'action d'un faisceau d'électrons d'énergie comprise entre 0,2 et 10 méga électrons-volts. Les doses utilisées pour le durcissement des prépolymères vont de 0,3 à 20,0 mégarads.

Les monomères acryliques ou méthacryliques tri- ou tétra-fonctionnels:

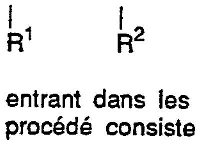

entrant dans les compositions de matière de l'invention sont obtenus dans l'un des procédés suivants: un premier procédé consiste à faire réagir la diamine $H_2N-R-NH_2$ sur un ester insaturé de glycidyle comme l'acrylate ou le

méthacrylate de glycidyle, la stoechiométrie de la réaction définissant la fonctionnalité désirée en motifs (méth)acryliques.

Les esters insaturés de glycidyle peuvent être préparés par réaction des acides acrylique ou méthacrylique avec une épihalohydrine telle l'épichlorhydrine ou l'épibromhydrine.

Les monomères tri-(méth)acryliques peuvent être préparés par réaction d'une diamine citée ci-dessus avec un ester (méth)acrylique de glycidyle et d'un dérivé saturé contenant un cycle oxiranne tel l'époxy 2,3 propanol-1 ou l'époxy 1,2-butane, la stoechiométrie de la réaction définissant la fonctionnalité désirée en motifs (méth)acryliques.

Un autre procédé de préparation des monomères de l'invention consiste à faire réagir une épihalohydrine choisie parmi l'épichlorhydrine et l'épibromhydrine sur les diamines telles que définies dans le premier procédé, dans des conditions conduisant à des composés multiépoxydés, lesquels seront estérifiés par l'acide acrylique ou méthacrylique. Le schéma des réactions s'écrit comme suit:

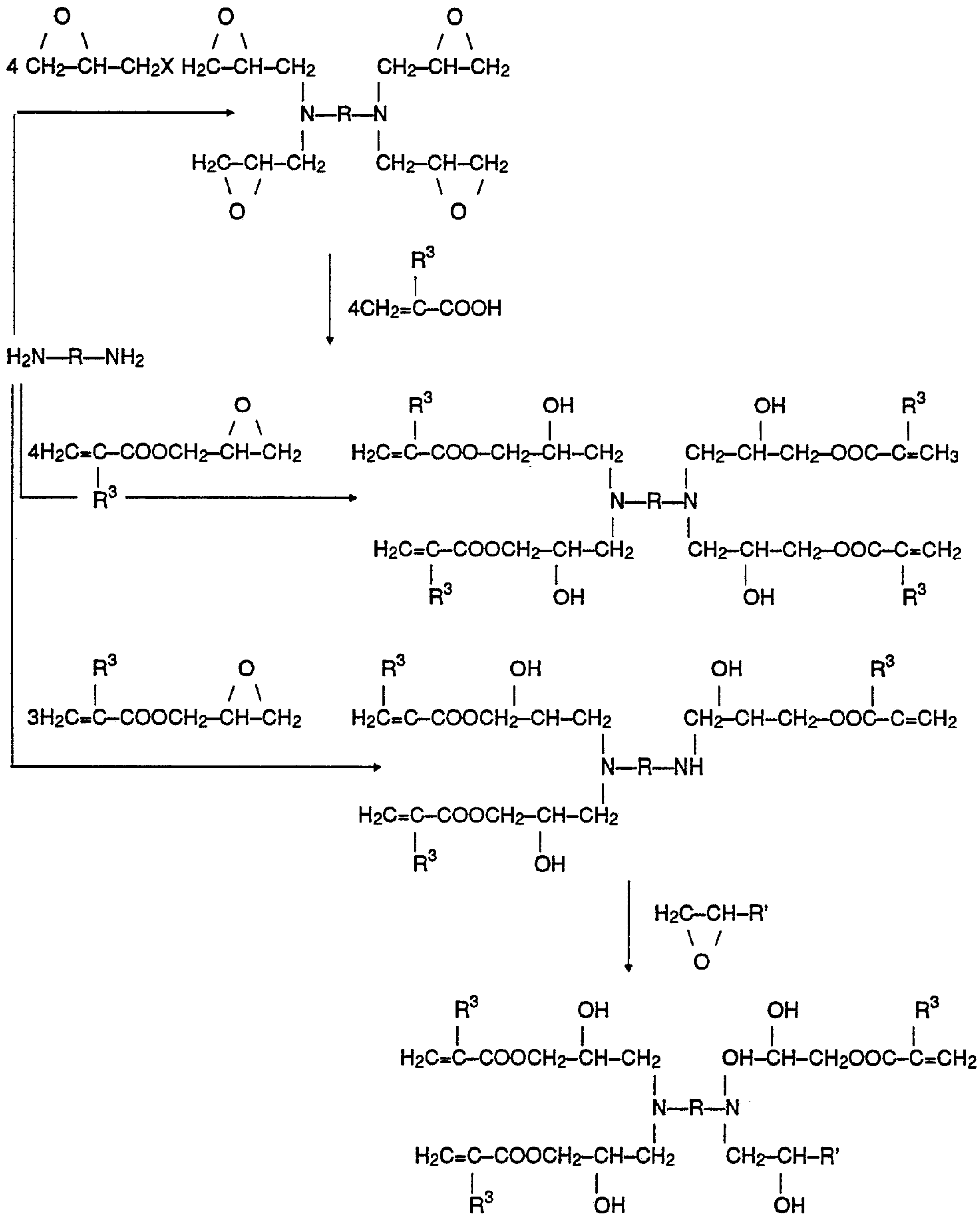

où R et $R^3$ ont la définition que dans la structure générale, *X* représente un atome de brome ou de chlore, R': $CH_2OH$ ou $-CH_2-CH_3$, par exemple.

Les exemples suivants sont donnés à titre indicatif nullement limitatif: ils concernent la synthèse de monomères de la forme:

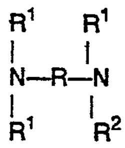

entrant dans les compositions de l'invention (exemples 1 à 14), des exemples de formulations où entrent ces monomères et leur polymérisation sous électrons accélérés avec mise en évidence de leurs propriétés thermiques caractérisées par leur HDT (exemples 15 à 26), des exemples comparatifs des propriétés thermiques de formulations de l'invention avec celles de formulations contenant des monomères acryliques classiques (exemples 27 - 28).

**Exemples**

**A. Synthèse des monomères**

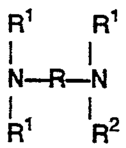

a) R comprend deux cycles articulés

**Exemple 1**

[N,N,N',N' tétra(hydroxy-2-méthacryloxy-3-propyl)] 4,4' di-amino-di-phényl-méthane (I)

Dans un réacteur muni d'un dispositif d'agitation, d'un thermomètre et d'un réfrigérant, on porte à 60°C un mélange de 99 g (0,5 mole) de 4,4'-di-amino di-phényl méthane, de 284 g (2,0 moles) de méthacrylate de glycidyle et de 0,15 g de paraméthoxyphénol, agité six heures à une température n'excédant pas 130°C. Le produit de réaction se présente sous la forme d'une résine jaune visqueuse. Le dosage des amines tertiaires indique alors un rendement supérieur à 95 %. La disparition des groupements époxyde est vérifiée par résonance magnétique nucléaire. L'analyse du spectre RMN confirme la structure suivante:

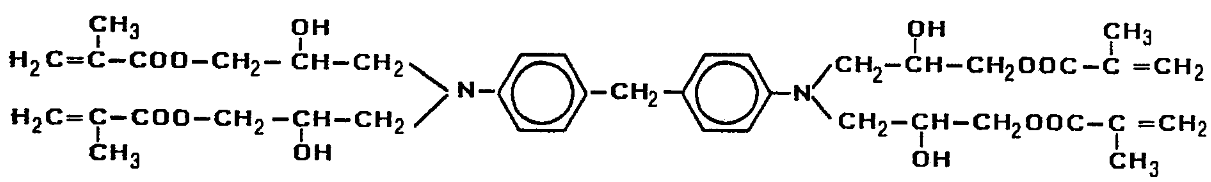

**Exemple 2**

[N,N,N'N' tétra(hydroxy-2 acryloxy-3-propyl)] 4,4' di-amino di-phényl-méthane (II)

On répète les opérations de l'exemple 1 en remplaçant les 284 g de méthacrylate de glycidyle par 256 g (2,0 moles) d'acrylate de glycidyle.

**Exemple 3**

[N,N,N',N' tétra(hydroxy-2-méthacryloxy-3-propyl)] 3,3', 5,5' tétra-méthyl 4,4'-di-amino-di-phényl-méthane (III)

On répète les opérations de l'exemple 1 en remplaçant les 99 g de 4,4'-di-amino di-phényl méthane par 127 g (0,5 mole) de (3,3',5,5' tétra-méthyl) 4,4'-di-amino di-phényl méthane.

**Exemple 4**

[N,N,N',N' tétra(hydroxy-2-méthacryloxy-3-propyl] 3,3', 5,5' tétra-éthyl 4,4' di-amino-di-phényl-méthane (IV)

On répète les opérations décrites dans l'exemple 1 en remplaçant les 99 g de 4,4'-di-amino di-phényl-méthane par 155 g (0,5 mole) de de (3,3' 5,5' tétra-éthyl) 4,4'-di-amino di-phényl méthane.

**Exemple 5**

[N,N,N',N' tétra(hydroxy-2-méthacryloxy-3-propyl)] 4,4' di-amino di-phényléther (V)

On répète les opérations décrites dans l'exemple 1 en remplaçant les 99 g de 4,4' di-amino di-phényl méthane par 100 g (0,5 mole) de 4,4' di-amino di-phényl éther.

**Exemple 6**

[N,N,N',N' tétra(hydroxy-2-acryloxy-3 propyl)] 4,4' di-amino di-phényl-sulfone (VI)

Dans un ballon équipé d'un thermomètre, d'un agitateur, d'un réfrigérant et d'une ampoule à brome, on place 140 g d'isobutanol et 555 g d'épichlorhydrine, puis 148,8 g de 4,4'-di-amino di-phényl sulfone. Après dissolution complète, on ajoute 2,5 g d'une solution aqueuse à 8 % d'hydroxyde de lithium monohydraté. Le mélange est alors agité à 50°C pendant deux heures sous un courant d'azote, puis à 100°C pendant cinq heures.

A la fin de cette opération, on ajoute 200 g d'une solution aqueuse de soude à 45 puis on poursuit l'agitation pendant 20 à 30 minutes à une température ne dépassant pas 30°C. On ajoute alors 300 g d'eau pour dissoudre le chlorure de sodium formé et après 30 minutes d'agitation, on sépare les phases aqueuse et organique. La phase organique est lavée avec 200 g d'eau, puis après séparation de phase, l'épichlorhydrine et l'isobutanol sont éliminés sous pression réduite (30 à 45 minutes à 120°C sous 4 mm de Hg).

L'analyse du résidu confirme la structure suivante tétra-époxydée comme produit majoritaire:

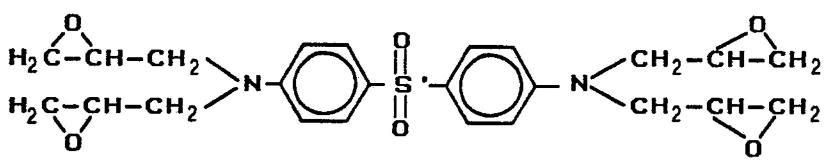

Dans un ballon muni d'un thermomètre, d'un agitateur et d'un réfrigérant, on place 94,4 g du produit précédemment préparé, 36 g d'acide acrylique, 1,3 g de chlorure de triéthyl benzyl ammonium, 0,10 g de paraméthoxyphénol et 100 g de benzène. Après dissolution complète, le mélange est porté à 80°C pendant huit heures. A la fin de l'opération à température ambiante, on ajoute 150 g de benzène et on effectue trois lavages à l'eau, puis deux lavages avec une solution aqueuse à 10 d'hydrogénocarbonate de sodium, suivis de deux nouveaux lavages à l'eau. La phase organique est séchée sur sulfate de sodium anhydre et le benzène est éliminé sous pression réduite. Le résidu est une résine visqueuse qui correspond à l'ester tétra-acrylique désiré.

**Exemple 7**

[N,N,N',N' tétra(hydroxy-2-méthacryloxy-3-propyl)] 4,4' di-amino di-phényl sulfone (VII)

A partir du produit intermédiaire tétraépoxydé de l'exemple 6, on répète l'opération d'estérification du même exemple en remplaçant les 36 g d'acide acrylique par 43 g d'acide méthacrylique.

**Exemple 8**

(N,N,N'N' tétra(hydroxy-2-méthacryloxy-3-propyl) 4,4' di-amino di-cyclohexyl-méthane (VIII)

On répète les opérations décrites dans l'exemple 1 en remplaçant les 99 g de 4,4'di-amino di-phényl méthane par 105 g de 4,4'-di-amino di-cyclohexyl méthane. Le produit de réaction est une résine brune visqueuse correspondant à la structure suivante:

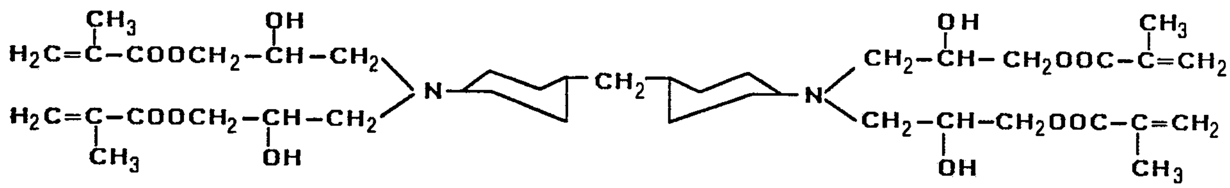

**Exemple 9**

[N,N,N,N' tri(hydroxy-2-méthacryloxy-3-propyl) N' (di-hydroxy-2,3 propanol)] 4,4' di-amino-phényl méthane (IX)

On répète les opérations décrites dans l'exemple 1 en remplaçant les 284 g de méthacrylate de glycidyle par 213 g du même produit. Lorsque tous les groupements époxyde sont consommés, on ajoute 37 g d'époxy-2,3 propanol-1 et on agite le mélange pendant trois heures à 100 / 110°C. Le produit obtenu correspond à la formule générale:

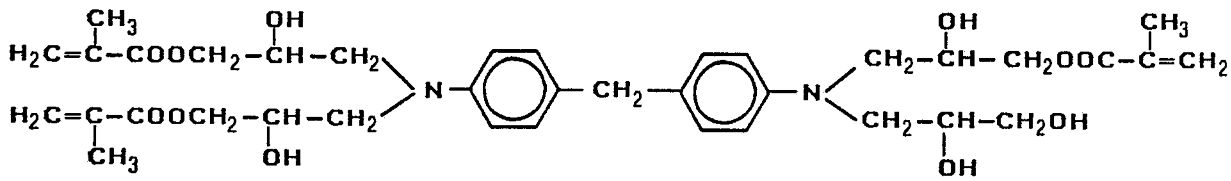

b) R comprend un seul cycle

**Exemple 10**

NNN'N'-tétra-(hydroxy-2-méthacryloxy-3)propylisophorone-diamine (X)

Dans un réacteur muni d'un dispositif d'agitation, d'une ampoule à brome, d'un thermomètre et d'un réfrigérant, on place 142 g de méthacrylate de glycidyle et 0,25 g de paraméthoxyphénol. Le milieu est porté à 60°C et 42,5 g d'isophoronediamine sont ajoutés goutte à goutte par l'ampoule pendant 60 à 90 minutes. Lors de l'addition, la température n'excèdera pas 90°C. Le mélange est ensuite maintenu à 110°C pendant trois heures jusqu'à la disparition du méthacrylate de glycidyle observée par analyse HPLC. Le produit de la réaction se présente sous la forme d'une résine jaune pâle. Le rendement est de 96 %.

**Exemple 11**

NNN'N'-tétra-(hydroxy-2-acryloxy-3-propyl)isophoronediamine (XI)

On répète l'exemple 10 en remplaçant 142 g de méthacrylate de glycidyle par 128 g d'acrylate de glycidyle.

**Exemple 12**

NNN'N'-tétra- (hydroxy-2-méthacryloxy-3-propyl)diamineparamenthane (XII)

Avec le même dispositif que celui décrit dans l'exemple 10, on ajoute à un mélange de 110,2 g de méthacrylate de glycidyle et 0,20 g de paraméthoxyphénol, 33 g de diaminoparamenthane à la température de 80°C pendant 60 minutes. L'agitation est poursuivie pendant 6 heures à 110°C. Le rendement mesuré par HPLC est supérieur à 95 %. Le produit se présente sous la forme d'une résine jaune.

**Exemple 13**

NNN'N'-tétra-(hydroxy-2-méthacryloxy-3-propyl)-1,2-diamino-cyclohexane (XIII)

Dans un réacteur muni d'un dispositif d'agitation, d'un thermomètre et d'un réfrigérant, on porte à 50°C un mélange de 57 g (0,5 mole) de 1,2-diamino-cyclohexane, 284 g (2,0 moles) de méthacrylate de glycidyle et 0,5 g de paraméthoxyphénol. Le mélange est agité pendant 30 minutes et la température portée à 80°C puis à 100°C pendant 6 heures. Le rendement mesuré par HPLC est de 99 %.

**Exemple 14**

NNN'N'-tétra-(hydroxy-2-méthacryloxy-3-propyl)-1,3-cyclohexane-bis-méthylamine(XIV)

On répète l'exemple 13 en remplaçant 57 g de 1,2-diamino-cyclohexane par 71 g (0,5 mole) de 1,3-cyclohexane-bis-méthylamine.

**B. Exemples de formulations et polymérisations**

**Exemple 15**

On prépare une série de solutions du prépolymère (I) dans chacun des monomères suivants : N-vinylpyrrolidone, méthacrylate de butyle, méthacrylate de diméthylaminoéthyle, méthacrylate d'hydroxyéthyle, à raison de 25 ou 40 parties en poids de monomère pour 100 parties du composé (I).

Chaque composition est alors placée dans un moule ouvert de 150 X 50 X 5 mm, puis dégazée sous vide. On soumet les échantillons ainsi préparés à l'action d'un faisceau d'électrons engendré par un accélérateur. Les conditions d'irradiation sont les suivantes:

- énergie moyenne du faisceau: 6,2 méga électrons-volts;
- atmosphère: air;
- vitesse de déplacement sous le faisceau: 18 mm / seconde.

Les échantillons sont durcis pour une dose inférieure à 1,0 mégarad. On leur applique cependant une dose totale de 10 mégarads distribuée en quatre passages.

Sur les plaques de polymères ainsi obtenues, on effectue des mesures de température de déflexion sous charge (HDT) définies par la norme NFT 51-005 avec contrainte de 1,8 $N/mm^2$. On effectue la même mesure sur des plaques ayant subi un post-traitement thermique de 5 à 10 minutes à 150°C (post T° sur les tableaux ci-après).

| Parties en poids de monomère pour 100 g de prépolymère (I) | HDT (°C) | HDT (°C) (post T°) |
|---|---|---|
| N-vinyl pyrrolidone 25 p | 190 | 200 |
| Méthacrylate de butyle 25 p | 212 | 227 |
| Méthacrylate de diméthylamino-éthyle 25 p | 193 | |
| Méthacrylate d'hydroxyéthyle 25 p | 205 | 225 |
| Méthacrylate d'hydroxyéthyle 40 p | 171 | 187 |

**Exemple 16**

On prépare une série de solutions de 100 parties de prépolymère dans 25 parties en poids de N-vinyl pyrrolidone pour chacun des prépolymères suivants:

(II), (III), (IV), (V) et (IX).

Chaque composition est alors traitée et irradiée selon le mode opératoire décrit dans l'exemple 15. Les valeurs de HDT des polymères obtenus sont les suivantes:

| Prépolymère | HDT (°C) | HDT (post T°) |
|---|---|---|
| II | 166 | |
| III | 136 | 200 |
| IV | 88 | 176 |
| V | 179 | 180 |
| IX | 91 | 152 |

**Exemple 17**

On prépare comme précédemment deux solutions de 100 parties en poids de prépolymère (VIII) dans respectivement 25 parties de N-vinyl pyrrolidone et 25 parties de méthacrylate de butyle. Les compositions sont traitées de manière identique à celle de l'exemple 15. Les valeurs de HDT mesurées sont les suivantes:

| Monomère | HDT (°C) | HDT (post T°) |
|---|---|---|
| N-vinyl pyrrolidone | 198 | 221 |
| Méthacrylate de butyle | 172 | 183 |

**Exemple 18**

On prépare une solution de 100 parties en poids du prépolymère (I) dans 25 parties de N-vinyl pyrrolidone et de 15 à 25 parties d'un acrylate d'uréthane polyester de masse moléculaire 1600 (commercialisé par la société Lankro sous le nom "Photomer 6052"). En opérant de manière identique que lors de l'exemple 15, on obtient des valeurs de HDT:

| Acrylate d'uréthane 6052 (nb de parties) | HDT (°C) | HDT (post T°) |
|---|---|---|
| 15 | 162 | 167 |
| 25 | 152 | 174 |

**Exemple 19**

On répète les opérations de l'exemple 18 en remplaçant l'acrylate d'uréthane polyester Photomer 6052 par un acrylate à base polyuréthane aromatique de Photomer 6162 de masse moléculaire 5000 et de même origine commerciale. Les résultats sont les suivants:

| Acrylate d'uréthane 6162 (nb de parties) | HDT (°C) | HDT (post T°) |
|---|---|---|
| 15 | 152 | 174 |
| 25 | 137 | 155 |

**Exemple 20**

On mélange au prépolymère (I) dans un monomère insaturé, un prépolymère di-acrylique obtenu comme suit: 92 g de di-glycidyl éther du bisphénol A d'indice 184 g par équivalent d'époxyde, 36 g d'acide acrylique, 1,05 g de chlorure de triéthylbenzylammonium et 0,10 g de paraméthoxyphénol sont portés sous agitation à une température comprise entre 80 et 95°C pendant cinq heures. La réaction est arrêtée lorsque le taux d'acide est inférieur à 2 % en mole.

Les compositions obtenues par mélange du prépolymère ainsi préparé, du prépolymère (I) et d'un monomère insaturé, sont traitées et irradiées de manière identique à celle des exemples précédents.

Les valeurs de HDT mesurées sur les polymères obtenus sont les suivantes:

| Prépolymere (I) (parties) | Prépolymère diacrylique | Monomère | HDT(°C) | HDT (post T°) |
|---|---|---|---|---|
| 90 | 10 | Méthacrylate d'hydroxy-éthyle 40 p. | 159 | 178 |
| 60 | 40 | " | 139 | 156 |
| 60 | 40 | " 25 p. | 137 | 161 |
| 80 | 20 | N-vinylpyrro-lidone 25 p. | 161 | 176 |

**Exemple 21**

On prépare une série de solution du monomère (X), à raison de 100 parties en poids de ce monomère pour 25 parties en poids d'un diluant monomère, le méthacrylate d'hydroxyéthyle (HEMA).

Chaque composition est alors disposée dans un moule ouvert de 150 X 50 X 5 mm puis dégazée sous vide. On soumet les échantillons ainsi préparés à l'action d'un faisceau d'électrons engendré par un accélérateur.

L'énergie moyenne du faisceau est de 6,2 mégaélectrons-volts. L'irradiation s'effectue en atmosphère ambiante. Les échantillons sont durcis pour une dose inférieure à 1,0 mégarad. Les doses appliquées vont de 1,0 à 5,0 mégarads. Sur les plaques de polymères ainsi obtenues, on effectue des mesures de température de déflection sous charge (HDT) définie par la norme NF 51.005 avec contrainte de 1,8 $N/mm^2$. Ces mesures peuvent être également effectuées après un post-traitement thermique des éprouvettes à des températures de 120 à 180°C.

**Exemple 22**

On procède comme à l'exemple 21, mais avec le monomère (XII).

**Exemple 23**

On procède comme à l'exemple 21, mais avec le monomère (XIII).

Les valeurs de HDT en fonction des doses appliquées figurent dans le tableau suivant:

| | | Exemple N° 21 Monomère X HDT °C | Exemple N° 22 Monomère XII HDT °C | Exemple N° 23 Monomère XIII HDT °C |
|---|---|---|---|---|
| Dose (Mégarad) | 1,0 | 159 | 142 | 120 |
| | 2,0 | 180 | 182 | 154 |
| | 3,0 | 196 | - | - |
| | 4,0 | 197 | 193 | 164 |
| | 5,0 | 201 | 194 | 169 |

**Exemple 24**

On prépare une série de solutions du monomère (X) à raison de 100 parties en poids de ce monomère pour 40 parties en poids de HEMA.

Ces compositions sont polymérisées et caractérisées selon la procédure définie dans l'exemple 21.

**Exemple 25**

On procède comme dans l'exemple 24 en remplaçant le monomère (X) par le monomère (XII).

**Exemple 26**

On procède comme dans l'exemple 24, en remplaçant le monomère (X) par le monomère (XIII).

Les résultats obtenus figurent dans le tableau suivant:

| | | Exemple N° 24 Monomère X HDT °C | Exemple N° 25 Monomère XII HDT °C | Exemple N° 26 Monomère XIII HDT °C |
|---|---|---|---|---|
| Dose (Mégarad) | 1,0 | 154 | 146 | 123 |
| | 2,0 | - | 182 | 141 |
| | 3,0 | 172 | - | - |
| | 4,0 | 175 | 182 | 149 |
| | 5,0 | 177 | 209 | 153 |

**C. Exemples comparatifs**

**Exemple 27**

On prépare des séries de solutions de différents monomères à raison de 100 parties en poids pour 25 parties en poids d'HEMA et on polymérise dans les conditions décrites à l'exemple 21.

On représente, figure 1, les valeurs des HDT obtenues pour les monomères (I), (VIII), (X) et (XII) et pour le produit d'estérification du diglycidyl éther du bisphénol A par l'acide acrylique noté DGEBA/AA: courbe (a). Ces courbes illustrent l'amélioration apportée aux propriétés thermiques du produit durci, par le remplacement du DGEBA/AA par un des monomères de l'invention. Pour une dose de 5 mégarads, par exemple, le gain réalisé sur les valeurs de HDT se situe entre 50 et 100°C. On constate par ailleurs, pour les monomères comprenant dans leur squelette au moins un cycle aliphatique (courbes VIII, X, XII), l'augmentation de réactivité, c'est-à-dire des valeurs de HDT supérieures à 150°C à partir d'une dose d'irradiation de l'ordre de 1 mégarad.

**Exemple 28**

On procède comme à l'exemple 27 mais avec 100 parties de monomères (méth)acryliques pour 40 parties d'HEMA. On trace les courbes illustrées à la figure 2. On fait les mêmes constatations qu'à l'exemple précédent en ce qui concerne l'effet des monomères de l'invention sur les propriétés thermiques des compositions durcies et l'avantage des squelettes comprenant au moins un cycle aliphatique sur la réactivité.

**Revendications**

1. Utilisation de compositions polymérisables comprenant au moins un monomère acrylique ou méthacrylique de la forme:

$R^1$ $R^1$
| |
N–R–N (A)
| |
$R^1$ $R^2$

où

$R^1$ est un groupement acrylique ou méthacrylique répondant à la formule $CH_2{=}C\text{-}COOCH_2\text{–}CH(OH)\text{–}CH_2\text{-}$ avec $R^3$ = H
|
$R^3$
ou $CH_3$;

$R^2$ représente un atome d'hydrogène, un enchaînement aliphatique saturé pouvant comporter jusqu'à dix atomes de carbone, par exemple un radical ($-CH_2\text{-}CH\text{-}CH_2\text{-}OH$)
|
OH
ou ($-CH_2\text{-}CH\text{-}CH_2\text{-}CH_3$), ou un groupement identique à $R^1$;
|
OH

R est un groupement divalent contenant deux cycles aliphatiques ou aromatiques articulés et est de la forme $R^4\text{-}R^5\text{-}R^4$ où $R^4$ représente un radical cyclique ou aromatique qui renferme de préférence 5 à 10 atomes de carbone substitués ou non par des groupements aliphatiques ou des hétéroatomes, en particulier le radical $R^4$ pourra être de la forme:

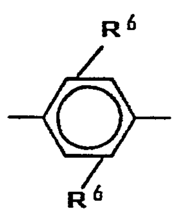 ou 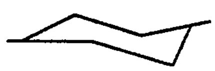

où $R^6$ représente un atome d'hydrogène, d'halogène, un radical méthyle, éthyle ou isopropyle;
$R^5$ représente un radical divalent qui peut être soit un simple atome (tel l'oxygène), soit un groupe d'atomes comportant des atomes de carbone, d'hydrogène, d'oxygène et / ou de soufre, permettant de relier les cycles décrits pour $R^4$ par des motifs alkylènes tels que méthylène ou éthylène ou des liaisons éther ou sulfones,

ou bien R ne contient qu'un seul cycle aliphatique ou aromatique substitué ou non, en particulier ceux où R est de la forme:

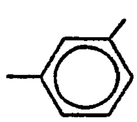 , 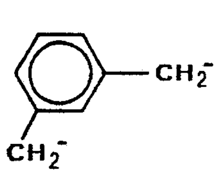

ou

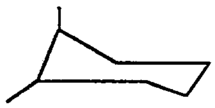
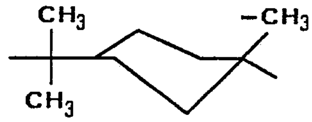
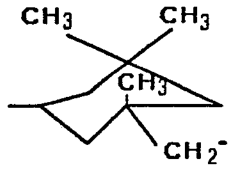
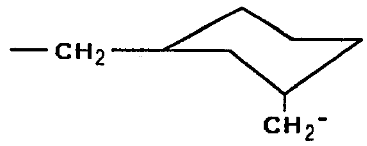

utilisation caractérisée en ce quelle conduit, dans des conditions de polymérisation radicalaire, à des polymères tridimensionnels réticulés ayant une température de deflexion sous charge (HDT), défine par la norme NFT 51-005 avec contrainte de 1,8 $N/mm^2$, allant jusqu'à 227°C.

2. Utilisation selon la revendication 1, caractérisée en ce que lesdites compositions polymérisables comprennent en outre au moins un second monomère choisi parmi les monomères vinyliques, acryliques ou méthacryliques.

3. Utilisation selon la revendication 2, caractérisée en ce que ledit second monomère est choisi parmi les acrylates et méthacrylates de butyle, d'hexyle, d'heptyle, d'éthyl-2-hexyle, de lauryle, de diméthylaminoéthyle, d'hydroxyéthyle, d'hydroxypropyle, les composés vinyliques du type N-vinylpyrrolidone, divinylbenzène, vinyltoluène, cyanurate de triallyle.

4. Utilisation selon l'une quelconque des revendications 1 à 3, caractérisée en ce que lesdites compositions polymérisables comprennent en outre au moins un prépolymère ou polymère insaturé.

5. Utilisation selon la revendication 4, caractérisée en ce que ledit prépolymère ou polymère insaturé est choisi parmi les esters acryliques ou méthacryliques, des diglycidyléthers, des bisphénols A ou F, ainsi que parmi les esters acryliques ou méthacryliques de polyuréthanes aromatiques ou aliphatiques.

6. Utilisation selon la revendication 1, caractérisée en ce que le monomère acrylique ou méthacrylique est choisi parmi les suivants:

- le [N,N,N',N' tétra(hydroxy-2-métharcryloxy-3-propyl)]4,4'-diamino-diphényl-méthane,
- le [N,N,N',N' tétra(hydroxy-2 acryloxy-3-propyl)]4,4'-diamino-diphényl-méthane,
- le [N,N,N',N' tétra(hydroxy-2-méthacryloxy-3-propyl)]3,3',5,5' tétra-méthyl-4,4'-diamino-diphénylméthane,
- le [N,N,N',N' tétra(hydroxy-2-méthacryloxy-3-propyl)]3,3'5,5' tétra-éthyl 4,4' -diamino-diphénylméthane,
- le [N,N,N',N' tétra(hydroxy-2-méthacryloxy-3-propyl)]4,4'-diamino-diphényl-éther,
- le [N,N,N',N' tétra(hydroxy-2-acryloxy-3-propyl)]4,4'-diamino-diphényl-sulfone,
- le [N,N,N',N' tétra(hydroxy-2-méthacryloxy-3-propyl)]4,4'-diamino-diphényl-sulfone,
- le [N,N,N',N' tétra(hydroy-2-méthacryloxy-3-propyl)]4,4'-diamino-dicyclohexyl-méthane,
- le[N,N,N'tri(hydroxy-2-méthacryloxy-3-propyl)N'(di-hydroxy-2,3-propanol)]4,4'-diamino-phénylméthane,
- le NNN'N'-tétra-(hydroxy-2-méthacryloxy-3)-propylisophoronediamine,
- la NNN'N'-tétra-(hydroxy-2-acryloxy-3-propyl)-isophorinediamine,
- le NNN'N'-tétra-(hydroxy-2-méthacryloxy-3-propyl)-diamineparamenthane,
- le NNN'N'tétra-(hydroxy-2-méthacryloxy-3-propyl)-1,2-diamino-cyclohexane
- laNNN'N'-tétra-(hydroxy-2-méthacryloxy-3-propyl)-1,3-cyclohexane-bis-méthylamine.

7. Utilisation selon la revendication 1, caractérisée en ce qu'après polymérisation radicalaire effectuée par voie thermique au moyen d'initiateurs chimiques choisis parmi les peroxydes, hydroperoxydes, composés azoïques, sous l'action d'un rayonnement X ou ultraviolet ou sous l'action d'un faisceau d'électrons accélérés, les polymères en résultant présentent une température de déflection sous charge (HDT), après post-traitement thermique, d'au moins 152°C.

8. Utilisation selon la revendication 7, caractérisée en ce que lorsque la polymérisation est effectuée sous l'action d'un faisceau d'électrons accélérés, il suffit d'utiliser une dose comprise entre 1 et 10 mégarads.

9. Utilisation selon la revendication 8, dans laquelle ladite composition comprend au moins un monomère dans la formule (A) duquel R renferme au moins un cycle aliphatique et caractérisée en ce qu'il suffit pour polymériser cette composition sous l'action d'un faisceau d'électrons accélérés d'une dose inférieure à 5 mégarads.

10. Applications des polymères obtenus selon l'une quelconque des revendication 1 à 9 à la fabrication de polymères convenant dans le domaine des matériaux composites, des adhésifs, des vernis, des pellicules et des revêtements de surface.

**Patentansprüche**

1. Verwendung von polymerisierbaren Zusammensetzungen, die mindestens ein Acryl- oder Methacryl-Monomer der Formel

$R^1$   $R^1$
|   |
N–R–N   (A)
|   |
$R^1$   $R^2$

enthalten,

in der $R^1$ eine Acryl- oder Methacryl-Gruppe entsprechend der Formel

$-CH_2=C-COOCH_2-CH(OH)-CH_2$
|
$R^3$

mit $R^3$ = H oder $CH_3$ bedeutet;

$R^2$ ein Wasserstoffatom, eine gesättigte aliphatische Kette mit bis zu 10 Kohlenstoffatomen, beispielsweise einen Rest

$(-CH_2-CH-CH_2-OH)$
|
OH

oder

$(-CH_2-CH-CH_2-CH_3)$
|
OH

oder eine mit $R^1$ identische Gruppe bezeichnet,

R eine zweiwertige, zwei aliphatische oder aromatische frei bewegliche Ringe umfassende Gruppe darstellt und von der Formel $R^4$-$R^5$-$R^4$ ist, in der $R^4$ einen zyklischen oder aromatischen Rest bedeutet, der vorzugsweise 5 bis 10 unsubstituierte oder durch aliphatische Gruppen oder Heteroatome substituierte Kohlenstoffatome aufweist, wobei der Rest $R^4$ insbesondere die Formel

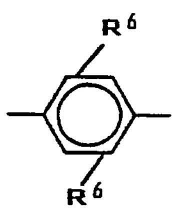
oder
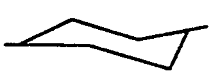

haben kann,

in der $R^6$ ein Wasserstoff- oder ein Halogenatom, einen Methyl-, Ethyl- oder Isopropylrest bedeutet,
$R^5$ einen bivalenten Rest bezeichnet, der entweder ein einfaches Atom (wie das Sauerstoffatom) oder eine Kohlenstoff-Wasserstoff-, Sauerstoff- und/oder Schwefelatome umfassende Atomgruppe darstellt und das Verbinden der Ringe von $R^4$ mittels Alkylen-Strukturen, wie Methylen- oder Ethylen-Strukturen, oder durch Äther- oder Sulfon-Bindungen erlaubt,
oder R nur einen einzelnen aliphatischen oder aromatischen, substituierten oder unsubstituierten Ring bedeutet, insbesondere einen jener, in denen R die Formel
oder

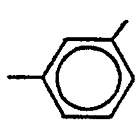
,
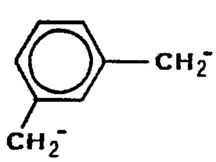

darstellt,

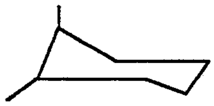
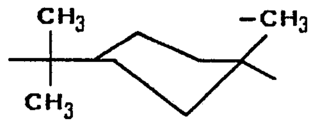
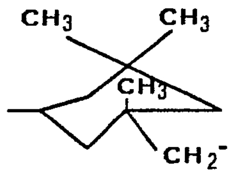
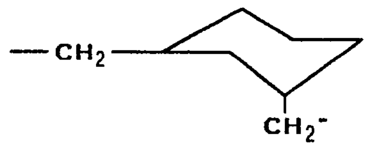

*dadurch gekennzeichnet*, daß die Verwendung unter Radikal-Polymerisations-Bedingungen zu dreidimensionalen vernetzten Polymeren führt, die eine durch die Norm NFT 51-005 mit einer Belastung von 1,8 $N/mm^2$ definierte Ablenktemperatur unter Belastung (HDT) von bis zu 227°C aufweisen.

2. Verwendung nach Anspruch 1, dadurch gekennzeichnet, daß die polymerisierbaren Zusammensetzungen außerdem mindestens ein zweites aus den Vinyl-, Acryl- oder Methacryl-Monomeren ausgewähltes Monomer aufweisen.

3. Verwendung nach Anspruch 2, dadurch gekennzeichnet, daß das zweite Monomer aus den Acrylaten und Methacrylaten von Butyl, Hexyl, Heptyl, Ethyl-2-hexyl, Lauryl, Dimethylaminoethyl, Hydroxyethyl, Hydroxypropyl oder den Vinyl-Verbindungen des Typs N-Vinylpyrrolidon, Bivinylbenzol, Vinyltoluol und Triallyl-cyanurat ausgewählt ist.

4. Verwendung nach einem der Ansprüche 1 bis 3, dadurch gekennzeichnet, daß die polymerisierbaren Zusammensetzungen außerdem mindestens ein Vorpolymer oder ein ungesättigtes Polymer umfassen.

5. Verwendung nach Anspruch 4, dadurch gekennzeichnet, daß das Vorpolymer oder das ungesättigte Polymer aus den Acryl- oder Methacrylestern, aus Diglycidyläthern, aus Bisphenolen A oder F, also aus Acryl- oder Methacrylestern aromatischer oder aliphatischer Polyurethane ausgewählt ist.

6. Verwendung nach Anspruch 1, dadurch gekennzeichnet, daß das Acryl oder Methacryl-Monomer aus folgenden Verbindungen ausgewählt ist:

[N,N,N',N' Tetra(hydroxy-2-methacryloxy-3-propyl)]4,4'-diamino-diphenyl-methan,
[N,N,N',N' Tetra(hydroxy-2-acryloxy-3-propyl)]4,4'-diamino-diphenyl-methan,
[N,N,N',N' Tetra(hydroxy-2-methacryloxy-3-propyl)]3,3',5,5' tetra-methyl-4,4'-diamino-diphenyl-methan,
[N,N,N',N' Tetra(hydroxy-2-methacryloxy-3-propyl)]3,3',5,5'tetra-ethyl 4,4 '-diamino-diphenyl-methan,
[N,N,N',N' Tetra(hydroxy-2-methacryloxy-3-propyl)]4,4'-diamino-diphenyl-äther,
[N,N,N',N' Tetra(hydroxy-2-acryloxy-3-propyl)]4,4'-diamino-diphenyl-sulfon,
[N,N,N',N' Tetra(hydroxy-2-methacryloxy-3-propyl)] 4,4'-diamino-diphenyl-sulfon,
[N,N,N',N' Tetra(hydroxy-2-methacryloxy-3-propyl)] 4,4'-diamino-dicyclohexyl-methan,
[N,N,N' Tri(hydroxy-2-methacryloxy-3-propyl)N'(dihydroxy-2,3-propanol)] 4,4'-diamino-phenyl-methan,
NNN'N'-Tetra-(hydroxy-2-methacryloxy-3)-propylisophorondiamin,
NNN'N'Tetra-(hydroxy-2-acryloxy-3-propyl)-isophorondiamin,
NNN'N'-Tetra-(hydroxy-2-methacryloxy-3-propyl)-diaminparamenthan,
NNN'N'-Tetra-(hydroxy-2-methacryloxy-3-propyl)- 1,2-diamino-cyclohexan,
NNN'N'-Tetra-(hydroxy-2-methacryloxy-3-propyl)-1,3-cyclohexan-bis-methylamin.

7. Verwendung nach Anspruch 1, dadurch gekennzeichnet, daß nach der auf thermischem Wege durchgeführten Radikal-Polymerisation mittels aus den Peroxyden, Hydroperoxyden oder zusammengesetzten Azoverbindungen ausgewählten chemischen Katalysatoren unter Einwirkung einer Röntgen- oder Ultraviolettstrahlung oder unter Einwirkung einer beschleunigten Elektronenstrahlung die Polymere schließlich nach einer Wärmenachbehandlung eine Ablenktemperatur unter Belastung (HDT) von mindestens 152°C aufweisen.

8. Verwendung nach Anspruch 7, dadurch gekennzeichnet, daß die Polymerisation unter Einwirkung einer beschleunigten Elektronenstrahlung durchgeführt wird, wobei die Verwendung einer Dosis zwischen 1 und 10 Megarad ausreicht.

9. Verwendung nach Anspruch 8, in der die Zusammensetzung mindestens ein Monomer der Formel (A) enthält, bei dem R mindestens einen aliphatischen Ring darstellt, dadurch gekennzeichnet, daß zur Polymerisierung dieser Zusammensetzung unter Einwirkung einer beschleunigten Elektronenstrahlung eine Dosis geringer als 5 Megarad ausreicht.

10. Anwendung von nach einem der Ansprüche 1 bis 9 erhaltenen Polymeren zur Herstellung von Polymeren zum Einsatz für den Bereich der Kompositwerkstoffe, Kleber, Lacke, Folien und Oberflächen-Überzüge.

## Claims

1. The use of polymerizable compositions comprising at least one acrylic or methacrylic monomer having the formula:

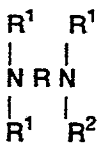

(A)

where $R^1$ is an acrylic or methacrylic group corresponding to the formula $CH_2=C-COOCH_2-CH(OH)-CH_2-$
$|$
$R^3$

where $R^3$ = H or $CH_3$;

$R^2$ denotes a hydrogen atom, a saturated aliphatic chain which can comprise up to ten carbon atoms for example a radical

($-CH_2-CH-CH_2-OH$ )
$|$
OH

or ($-CH_2-CH-CH_2-CH_3$), or a group identical to $R^1$.
$|$
OH

R is a divalent group containing two linked aliphatic or aromatic rings and has the formula $R^4-R^5-R^4$, where $R^4$ denotes a cyclic or aromatic radical preferably comprising to 10 carbon atoms substituted or unsubstituted by aliphatic groups or heteroatoms, more particularly the radical $R^4$ possibly having the formula:

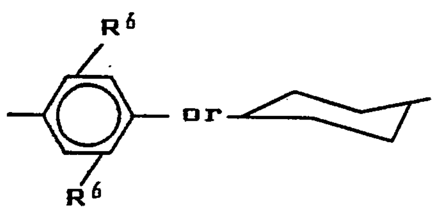

where $R^6$ denotes a hydrogen or halogen atom, a methyl, ethyl or isopropyl radical:
$R^5$ denotes a diva lent radical which can be either a single atom (such as oxygen), or a group of atoms comprising carbon, hydrogen, oxygen and/or sulphur atoms, enabling the rings described for $R^4$ to be joined by alkylene units, such as methylene or ethylene or ether or sulphone bonds,

or R contains a single substituted or unsubstituted aliphatic or aromatic ring, more particularly those in which R has the form:

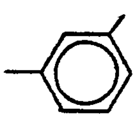

,

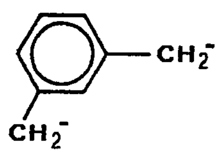

or

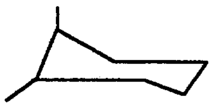
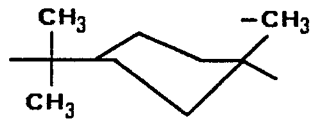
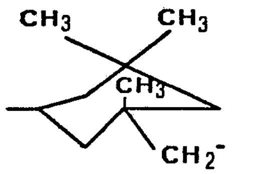
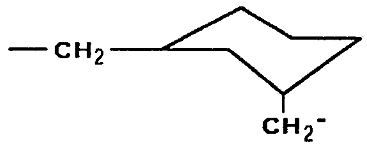

use being characterized in that it leads in conditions of radical polymerization to cross-linked tridimensional polymers having a deflection temperature under load (HDT), as defined by Standard NFT 51-005, of up to 227°C with a stress of 1.8 $N/mm^2$.

2. Use according to claim 1, characterized in that said polymerizable compositions also comprise at least one second monomer selected from the group comprising the vinyl, acrylic or methacrylic monomers.

3 Use according to claim 2, characterized in that said second monomer is selected from the butyl, hexyl, heptyl, ethyl-2-hexyl, lauryl, dimethylaminoethyl, hydroxyethyl and hydroxypropyl acrylates and methacrylates, and vinyl compounds of the N-vinylpyrrolidone, divinylbenzene, vinyltoluene and triallyl cyanurate.

4. Use according to any of claims 1 to 3, characterized in that said polymerizable compositions also comprise at least one unsaturated prepolymer or polymer.

5. Use according to claim 4, characterized in that said unsaturated prepolymer or polymer is selected from acrylic or methacrylic esters, diglycidyl ethers, bisphenols A or F, and also from the acrylic or methacrylic esters of aromatic or aliphatic polyurethanes.

6. Use according to claim 1, characterized in that the acrylic or methacrylic monomer is selected from the following:

[N,N,N',N' tetra(hydroxy-2-methacryloxy-3-propyl)]4,4'diamino-diphenyl-methane,
[N,N,N',N' tetra(hydroxy-2-acryloxy-3-propyl)]4,4'-diamino-diphenyl-methane,
[N,N,N',N' tetra(hydroxy-2-methacryloxy-3-propyl)]3,3',5,5' tetra-methyl-4,4'-diamino-diphenyl-methane,
[N,N,N',N' tetra(hydroxy-2-methacryloxy-3-propyl)]3,3',5,5' tetra-ethyl 4,4'-diamino-diphenyl-methane,
[N,N,N',N' tetra(hydroxy-2-methacryloxy-3-propyl)]4,4'-diamino-diphenyl-ether,
[N,N,N',N' tetra(hydroxy-2-acryloxy-3-propyl)]4,4'-diamino-diphenyl-sulfone,
[N,N,N',N' tetra(hydroxy-2-methacryloxy-3-propyl)]4,4'-diamino-diphenyl-sulfone,
[N,N,N',N' tetra(hydroxy-2-methacryloxy-3-propyl)]4,4'-diamino-dicyclohexyl-methane,
[N,N,N' tri(hydroxy-2-methacryloxy-3-propyl)N'(dihydroxy-2,3-propanol)]4,4'-diamino-phenyl-methane,
NNN'N' tetra-(hydroxy-2-methacryloxy-3-propyl)-isophoronediamine,
NNN'N' tetra-(hydroxy-2-acryloxy-3-propyl)-isophoronediamine,
NNN'N' tetra-(hydroxy-2-methacryloxy-3-propyl)-diamineparamenthane,
NNN'N' tetra(hydroxy-2-methacryloxy-3-propyl)-1,2-diamino-cyclohexane,
NNN'N'tetra-(hydroxy-2-methacryloxy-3-propyl)-1,3-cyclohexane-bis-methylamine.

7. Use according to claim 1, characterized in that after radical polymerization performed thermally by means of chemical initiators chosen from among the peroxides, hydroperoxides, azo compounds, under the action of X-rays or ultraviolet radiation or under the action of an accelerated electron beam, the resulting polymers have a deflection temperature under load (HDT) of at least 152°C after thermal post-treatment.

8. Use according to claim 1, characterized in that when polymerization is performed under the action of an accelerated electron beam it is enough to use a dose of between 1 and 10 megarads.

9. Use according to claim 8, wherein said composition comprises at least one monomer in the formula (A) of which R contains at least one aliphatic ring, characterized in that it is enough to polymerize said composition under the action of an accelerated electron beam with a dose less than 5 megarads.

10. Applications of the polymers obtained according to any of claims 1 to 9 to the production of polymers suitable for the field of composite materials, adhesives, varnishes, films and surface coatings.

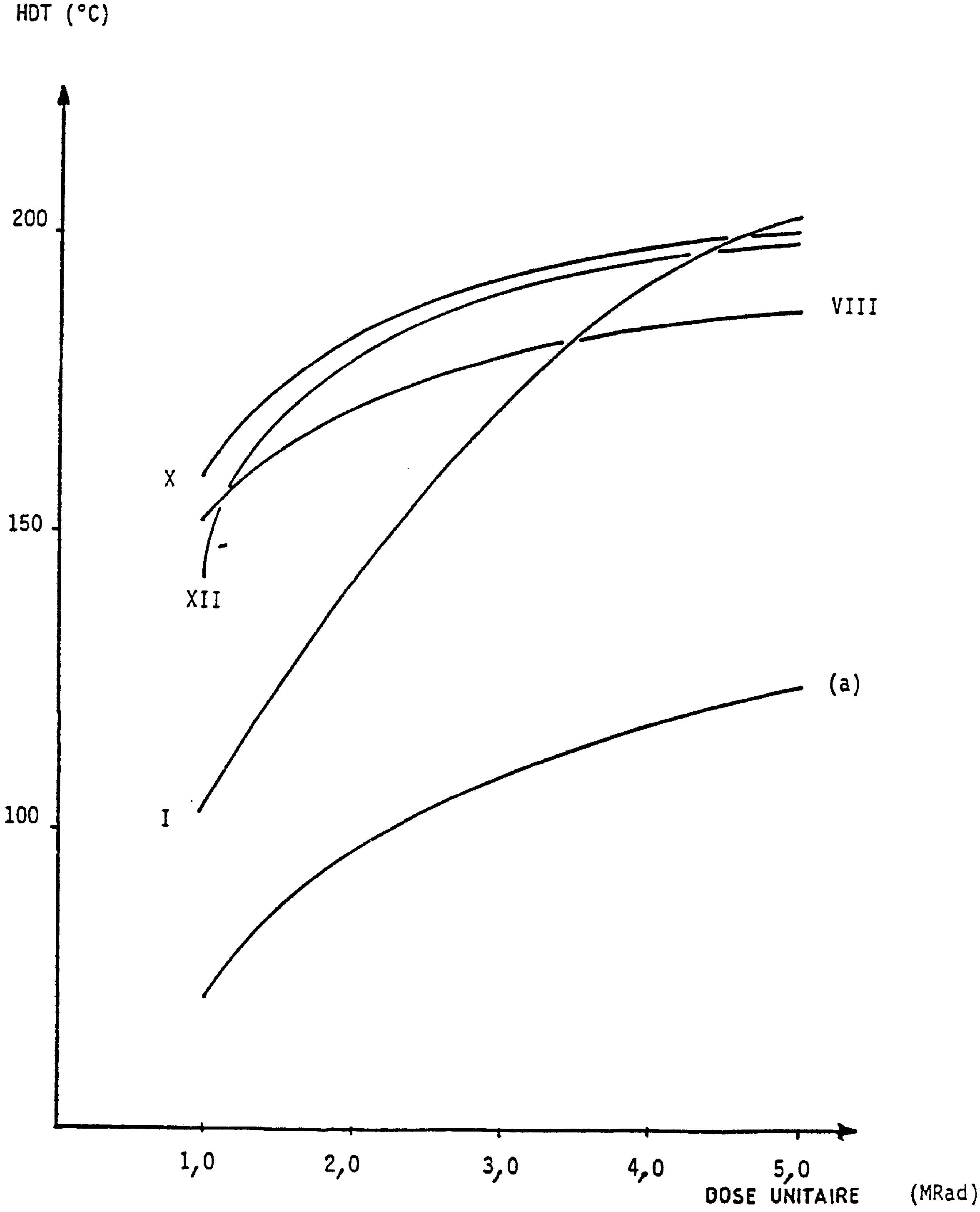


FIG. 1

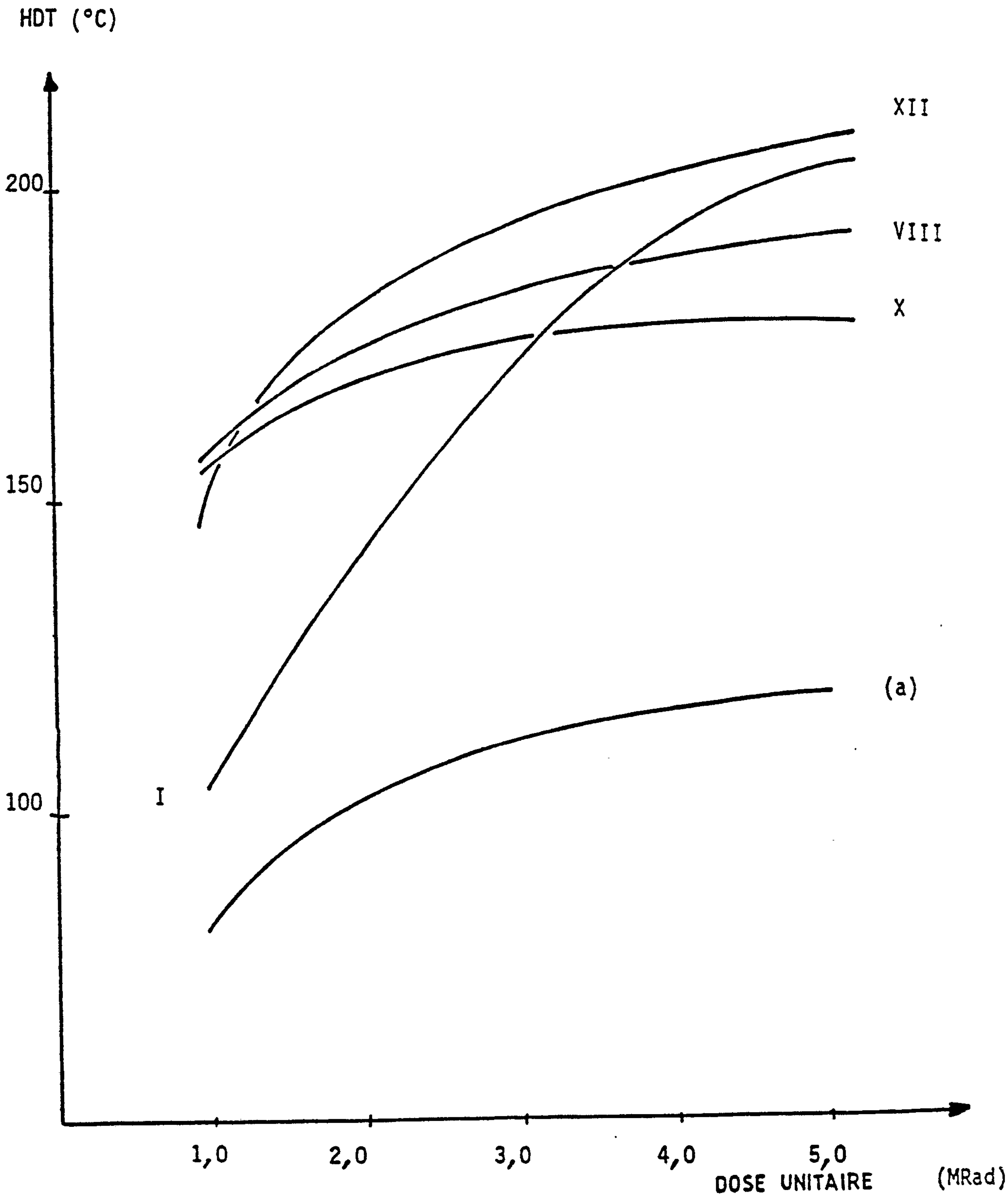


FIG. 2